# EUROPEAN PATENT APPLICATION

(11) **EP 2 713 437 A2**
(43) Date of publication of application: **02.04.2014**
(21) Application number: 13180882.6
(22) Date of filing: 19.08.2013
(51) Int. Cl.: H01Q 1/24, H01Q 1/40, B29C 45/14, B29L 31/34

(54) **Antenna connection structure and its companion electronic product**

(30) Priority: 26.09.2012 CN 201220496039 U
(71) Applicant: Huawei Technologies Co., Ltd., Shenzhen, Guangdong 518129 (CN)
(72) Inventor: Yu, Jiao, Shenzhen Guangdong 518129, P.R. (CN); Dong, Dahai, Shenzhen Guangdong 518129, P.R. (CN); Huang, Pingliu, Shenzhen Guangdong 518129, P.R. (CN)
(74) Representative: Lord, Michael

(57) **Abstract**

An antenna connection structure and its companion electronic product are disclosed in the present utility model. The present utility model relates to the field of communications. The antenna connection structure includes an antenna and an IML (In-Mold Decoration, in-mold decoration technology) diaphragm. The antenna is pasted on the IML diaphragm, and an injection molding layer is provided on the IML diaphragm outside the antenna. An electronic product is also disclosed in the present utility model, including the antenna connection structure. The electronic product is a cell phone. The antenna is pasted on the IML diaphragm in the present utility model, which diminishes the assembly thickness of the antenna. Therefore, the thickness of the product is also reduced. The injection molding layer is provided on the IML diaphragm outside the antenna. This helps to fix the antenna tightly and ensure the strength of the product.

## Description

### TECHNICAL FIELD

The present utility model relates to the field of communications, and in particular, to an antenna connection structure and its companion electronic product.

### BACKGROUND

Nowadays, the NFC (Near Field Communication, Near Field Communication) mobile payment technology is increasingly applied to cell phones. To fulfill the function, an NFC antenna needs to be added in the process of assembly, and the thickness of the antenna is about 0.2 to 0.5 mm.

At present, there are two methods to assemble the NFC antenna to a cell phone: 1. Paste the NFC antenna on the inside of a battery cover. 2. Paste the NFC antenna on the surface of a battery.

Both methods enable the thickness of the electronic product to increase about 0.2 to 0.5 mm. When the first method is adopted, the NFC antenna is easy to drop if it is used for a long time. Therefore, the first method brings a low reliability. When the second method is adopted, only an original battery can be used, and a third party battery cannot be used. Therefore, the second method is subjected to restrictions.

### SUMMARY

The purpose of the present utility model is to provide a thin antenna connection structure with a tight connection.

The present utility model also provides an electronic product.

To fulfill the purpose, in one aspect:
the antenna connection structure includes an antenna and an IML (In-Mold Decoration,
in-mold decoration molding technology) diaphragm. The antenna is pasted on the IML diaphragm, and an injection molding layer is provided on the IML diaphragm outside the antenna.

In combination with the first aspect, in a first possible implementation manner, an injection molding layer is provided on the IML diaphragm outside the antenna.

In combination with the first possible implementation manner, in a second possible implementation manner, the injection molding layer is 0.2 to 0.4 mm thicker than the antenna.

In combination with the first aspect, in a third possible implementation manner, an injection molding layer is provided on the lower surface and the four side surfaces of the antenna.

In combination with the third possible implementation manner, in a fourth possible implementation manner, an injection molding layer is provided on the upper surface; and two contact points of signals on the antenna are exposed outside the injection molding layer.

In combination with the first aspect, the first possible implementation manner, the second possible implementation manner, the third possible implementation manner and the fourth possible implementation manner, in a fifth possible implementation manner, the antenna is a Near Field Communication NFC antenna.

In combination with the fifth possible implementation manner, in a sixth possible implementation manner, the NFC antenna is a hardboard NFC antenna.

In the other aspect:
the present utility model also provides an electronic product, including the antenna connection structure.

In combination with the other aspect, in the first possible implementation manner, the electronic product is a cell phone.

Beneficial effects of the technical solutions provided in the embodiments of the present invention are as follows:
the antenna is pasted on the IML diaphragm in the present utility model, which diminishes the assembly thickness of the antenna. Therefore, thickness of the product is also reduced. The injection molding layer is provided on the IML diaphragm outside the antenna. This ensures that the antenna is fixed tightly and increases the strength of the product.

### BRIEF DESCRIPTION OF DRAWINGS

To illustrate the technical solutions in the embodiments of the present utility model more clearly, the following briefly describes the accompanying drawings needed for describing the embodiments. Apparently, the accompanying drawings in the following description merely show some embodiments of the present utility model, and persons of ordinary skill in the art may derive other drawings from the accompanying drawings without creative efforts.
FIG. 1 is a structural schematic diagram of an antenna connection structure according to an embodiment of the present utility model; and
FIG. 2 is a flowchart of assembling the antenna connection structure according to an embodiment of the present utility model.

In the accompanying drawings, components represented by reference numerals are listed as follows:
1. Antenna;
2. IML diaphragm, 20. IML film, 21. Printed layer;
3. Injection molding layer
4. Mold

### DESCRIPTION OF EMBODIMENTS

To illustrate the objectives, technical solutions and advantages of the present utility model more clearly, the embodiments of the present utility model are further described in the following with reference to the accompanying drawings.

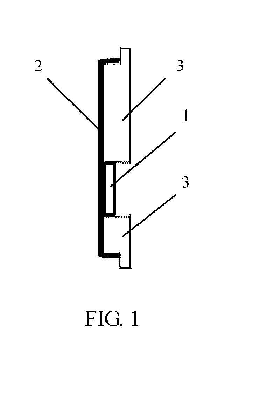

In FIG. 1, an antenna connection structure includes an antenna 1 and an in-mold decoration IML diaphragm 2. The antenna 1 is pasted on the IML diaphragm 2; and an injection molding layer 3 is provided on the IML diaphragm 2 outside the antenna.

The antenna is pasted on the IML diaphragm in the present utility model. This diminishes the assembly thickness of a product and ensures the strength of the product in the connection part between the IML diaphragm and the antenna. An injection molding layer is provided on the IML diaphragm outside the antenna. This ensures the strength of the product and the connection between the IML diaphragm and the antenna, which makes the antenna difficult to drop and increases the reliability of the antenna.

The embodiment is on the basis of the forgoing embodiment. The injection molding layer 3 is provided on the IML diaphragm 2 on which the antenna 1 is pasted.

In this embodiment, the injection molding layer is only provided on the four side surfaces of the antenna and the antenna is fixed on the IML diaphragm.

The embodiment is on the basis of the above embodiment. The injection molding layer 3 provided on the four side surfaces of the antenna 1 is more than 0.2 mm thicker than the antenna 1. 0.2 to 0.4 mm is preferable.

The injection molding layer 3 of the embodiment is thicker than the antenna 1. The identification distance of the antenna is increased by 5 to 10 mm after the antenna is assembled.

The embodiment is on the basis of the above embodiment. The injection molding layer 3 is provided on the lower surface and the four side surfaces of the antenna.

The antenna of the embodiment is usually installed in a battery compartment. A plastic part covers the five surfaces of the antenna in the process of injection molding, which brings a better connection.

The embodiment is on the basis of the above embodiment. The injection molding layer 3 can be provided on the upper surface of the antenna 1, and two contact points of signals on the antenna are exposed outside the injection molding layer 3.

The method of covering the antenna completely by the injection molding layer may also be adopted. In this case, two contact points of signals on the antenna need to be exposed outside the injection molding layer to enable the antenna to connect to a cell phone board. Complete coverage provides a very strong connection, but meanwhile it increases the whole thickness. Five surfaces of the antenna are usually covered, and the connection is strong.

The antenna in the present utility model is an NFC antenna. A hardboard NFC antenna is preferable. The hardboard NFC antenna may increase the strength of a product.

The present utility model also provides an electronic product, and the electronic product adopts the antenna connection structure.

The electronic product may be a cell phone.

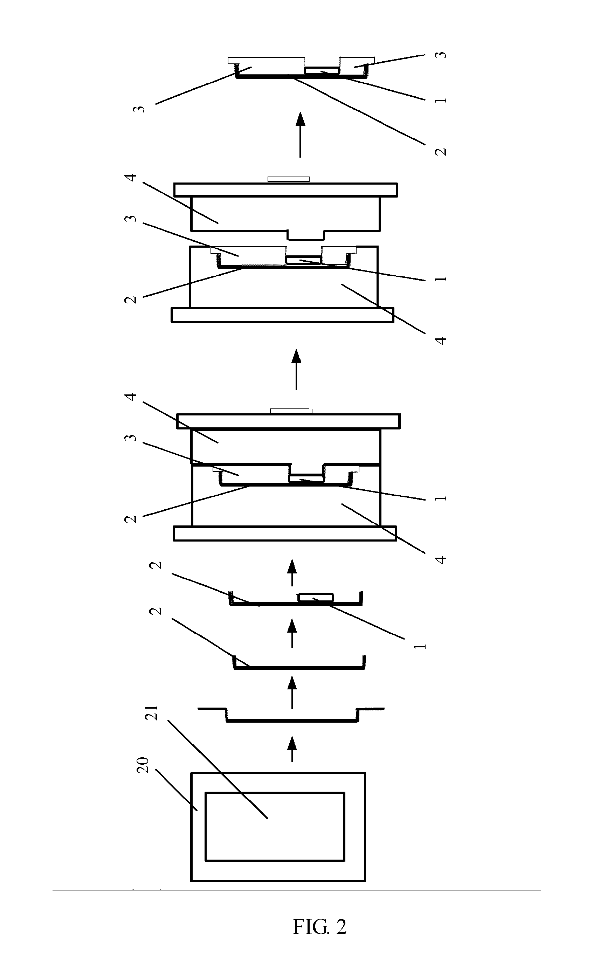

Referring to FIG. 2, the assembly process of the present utility model:
(1) use the widely industry-accepting hardboard NFC antenna;
(2) paste the NFC antenna to the IML diaphragm;
(3) put a pasted component in the mold for injection molding after the NFC antenna is pasted to the IML diaphragm.

For an assembly procedure, reference is made to FIG. 2.

The printed layer 21 is provided on the IML film 20, hot briquetting, press forging and pasting are performed in turn on the IML film 20 on which the printed layer 21 is provided, and the IML diaphragm 2 is formed. Then the NFC antenna 1 is pasted to the IML diaphragm 2, and a pasted product is put in the mold 4. The mold 4 is closed, and plastic is injected into the mold 4. After the process of injection molding, the injection molding layer 3 is formed. Finally, the mold 4 is opened and a product is taken out. A finished product is the antenna connection structure of the present utility model.

The finished product may be used as a rear cover of a cellphone.

The present utility model provides the following advantages:
1. The present utility model diminishes the assembly thickness of the NFC antenna in design and ensures the strength of the product.
2. The identification distance of the antenna is increased by 5 to 10 mm.
3. In the present utility model, the NFC antenna is a hardboard antenna. Such a material is harder than the plastic of the injection molding layer. Therefore, the strength of the shell of the antenna structure is increased, ensuring the product strength.
   Substituting the NFC antenna for part of the plastic in design serves the purpose of saving plastic material.
4. The NFC antenna is pasted to the IML diaphragm first, and then the pasted component is put in the mold for injection molding. This ensures a strong connection between the NFC antenna and the IML diaphragm.

The forgoing descriptions are merely exemplary embodiments of the present utility model, and are not intended to limit the present utility model. Any modifications, equivalent substitutions and improvements made within the principle of the present utility model should be included within the scope of protection of the present utility model.

## Claims

1. An antenna connection structure, comprising:
an antenna; and
an IML diaphragm adopting in-mold decoration technology; wherein
the antenna is pasted on the IML diaphragm; and
an injection molding layer is provided on the IML diaphragm outside the antenna.

2. The antenna connection structure according to claim 1, wherein
an injection molding layer is provided on the IML diaphragm outside the antenna.

3. The antenna connection structure according to claim 2, wherein
the injection molding layer is 0.2 to 0.4 mm thicker than the antenna.

4. The antenna connection structure according to claim 1, wherein
an injection molding layer is provided on the lower surface and the four side surfaces of the antenna.

5. The antenna connection structure according to claim 4, wherein an injection molding layer is provided on the upper surface, and two contact points of signals on the antenna are exposed outside the injection molding layer.

6. The antenna connection structure according to any one of claims 1 to 5, wherein
the antenna is a Near Field Communication NFC antenna.

7. The antenna connection structure according to claim 6, wherein
the NFC antenna is a hardboard NFC antenna.

8. An electronic product, comprising:
the antenna connection structure specified in any one of claims 1 to 7.

9. The electronic product according to claim 8, wherein
the electronic product is a cell phone.
